Europäisches Patentamt

European Patent Office

Office européen des brevets

(19)

(11) Veröffentlichungsnummer: **0 346 320 B1**

# EUROPÄISCHE PATENTSCHRIFT

(12)

(45) Veröffentlichungstag der Patentschrift:
**11.12.91 Patentblatt 91/50**

(51) Int. Cl.$^5$: **F24J 2/04**

(21) Anmeldenummer: **89890156.6**

(22) Anmeldetag: **24.05.89**

(54) **Fenster-, Fassaden- und Wandkonstruktion.**

(30) Priorität: **06.06.88 AT 1467/88**

(43) Veröffentlichungstag der Anmeldung:
**13.12.89 Patentblatt 89/50**

(45) Bekanntmachung des Hinweises auf die
Patenterteilung:
**11.12.91 Patentblatt 91/50**

(84) Benannte Vertragsstaaten:
**BE CH DE ES FR GB IT LI LU NL SE**

(56) Entgegenhaltungen:
**DE-A- 2 826 937**
**DE-A- 2 829 523**
**DE-A- 2 833 241**
**DE-A- 3 228 364**

(56) Entgegenhaltungen:
**FR-A- 2 273 678**
**US-A- 3 981 294**
**US-A- 4 215 672**
**US-A- 4 380 994**

(73) Patentinhaber: **"Conproject"**
**Handelsvertretung und techn. Büro für**
**Maschinenbau Frantl & Co. OHG.**
**Laudongasse 33 Stiege 6**
**A-1080 Wien (AT)**

(72) Erfinder: **Frantl, Erich, Ing.**
**Laudongasse 33/76**
**A-1080 Wien (AT)**

(74) Vertreter: **Beer, Manfred, Dipl.-Ing. et al**
**Patentanwälte Dipl.-Ing. Otto Beer, Dipl.-Ing.**
**Manfred Beer Lindengasse 8, Postfach 264**
**A-1071 Wien (AT)**

## Beschreibung

Die Erfindung betrifft eine Fenster-, Fassaden- und Wandkonstruktion mit wenigstens drei im Abstand voneinander angeordneten Scheiben aus licht- und wärmestrahlendurchlässigem Werkstoff, wie Glas od. dgl., mit zwischen den Scheiben angeordneten Zwischenräumen, mit Leitungen für die Zufuhr und Ableitung von Wärmeübertragungsmedium, das gegebenenfalls gefärbt und/oder mit z.B. färbigen und/ oder reflektierenden Pigmenten pigmentiert ist bzw. bei Bedarf gefärbt bzw. pigmentiert werden kann, in bzw. aus wenigstens einem Zwischenraum, mit einer in den Kreislauf des Wärmeübertragungsmediums geschalteten Wärmepumpe, durch die das aus dem Zwischenraum abströmende Wärmeübertragungsmedium wieder auf eine Temperatur unterhalb der Umgebungstemperatur abgekühlt wird, und daß die dabei gewonnene, hochtransformierte Wärme Wärmeverbrauchern zugeführt und/oder gespeichert wird, und mit den Leitungen zugeordneten Schaltmitteln, durch die das Wärmeübertragungsmedium bein Zwischenräumen zwischen den Scheiben durch höchstens n-1 Zwischenräume geleitet wird.

Eine der bekannten Möglichkeiten zur Nutzung von Umweltenergie ist die Anwendung von an der Außenwand von Gebäuden angeordneten Absorber-Elementen. Mit diesen meist großflächig ausgeführten Elementen wird der Umwelt Wärme entzogen und über wenigstens eine Wärmepumpe in den beispielsweise für Warmwasserbereitung oder Heizzwecke nutzbaren Bereich hochtransformiert. Die Verwendung von Wärmepumpen, die beispielsweise elektrisch betrieben werden, als Einrichtung zur Nutzung der Umweltenergie, ist bekannt.

Bei den in den gemäßigten Zonen im Winter vorherrschenden durchschnittlichen Außentemperaturen von knapp über 0°C kann mit dem beschriebenen System für Heizzwecke etwa das Dreifache der aufgewendeten Energie gewonnen werden.

Weiters ist es bekannt, daß das Verhältnis von Nutzenergie zu für den Betrieb der Wärmepumpe aufgewendeter Energie umso schlechter wird, je niedriger die Außentemperatur und je höher die erforderliche Temperatur der Nutzwärme liegt.

Bei den bekannten Außenwandabsorbern, die an Dächern oder Fassaden angebracht werden, wird Energie überwiegend aus der Umgebungsluft entnommen, da die zwischen den Absorberflächen und dem Gebäudeinnenraum angeordnete Wärmedämmung der Außenwände des Gebäudes entsprechend hoch bemessen werden kann.

Eine bekannte Schwachstelle der Wärmedämmung eines jeden Gebäudes sind die Fensterflächen, da sich auch bei Verwendung von Isolierglas Wärmedurchgangszahlen von unter etwa 1,5 W/m²K (Wärmedurchgangszahl für ein fertiges Fenster samt Rahmen) nicht verwirklichen lassen. Diese Wärmedurchgangszahl ist etwa 5 bis 10 mal so groß wie die eines guten Außenwandaufbaus. Es wurde gezeigt, daß bei einem durchschnittlichen Gebäude mit guter Außendämmung etwa 50% der Transmissionswärmeverluste über die Fenster mit Doppelverglasung entstehen.

Aber nicht nur im Winter, sondern auch im Sommer stellen die Fensterflächen ein Problem dar, da sie der kritische Bereich einer Hausfassade bezüglich des Schutzes vor erhöhten Außentemperaturen sind. Die sommerliche Hitzebelastung besteht zum Großteil aus Wärmestrahlung, die derzeit nur durch Abschattung oder Reflexion am Durchtritt durch Fensterflächen gehindert oder dieser Durchtritt wenigstens verringert werden kann.

Fenster haben im Gegensatz zu guten Außenwandaufbauten mit ihrer hohen Masse kein Wärmespeichervermögen und können daher auch gegenüber kurzfristigen Temperaturschwankungen nicht ausgleichend wirken.

Aus der DE-OS 2815056 ist ein Fenster bekannt, das aus vier Scheiben besteht, wobei durch den mittleren Zwischenraum ein flüssiges Wärmeübertragungsmedium gepumpt wird, dem in einer angeschlossenen Wärmepumpenanlage die aufgenommene Energie wieder entzogen wird.

In der DE-OS 2736137 wird ein Fenster, bestehend aus mehr als fünf Scheiben, wobei nicht alle Zwischenräume von einem Wärmeübertragungsmedium durchströmt werden, beschrieben. Das Wärmeübertragungsmedium, das gefärbt sein kann, wird durch den Zwischenraum geleitet, auf dessen Seite in der Umgebung die niedrigere Temperatur vorliegt. Auch bei der DE-OS 2736137 wird dem Wärmeübertragungsmedium durch eine Wärmepumpe die gespeicherte Energie wieder entzogen.

Der vorliegenden Erfindung liegt die Aufgabe zugrunde, die Vorteile der an sich bekannten Absorbersysteme auch im Fensterbereich einsetzen zu können und gleichzeitig den unerwünscht hohen Wärmedurchgang durch die Fenster sowohl im Winter als auch im Sommer zu unterbinden. Außerdem soll auf einem indirekten Wege auch das Speichervermögen im Bereich des Fensters erhöht werden.

Erfindungsgemäß wird dies bei einer Glasfenster-, Fassaden- und Wandkonstruktion dadurch erreicht, daß der Zwischenraum zwischen zwei Scheiben, auf dessen Seite in der Umgebung (Außenluft oder Rauminnenseite) die höhere Temperatur vorliegt, mit Wärmeübertragungsmedium nicht beaufschlagbar ist, daß das Wärmeübertragungsmedium beim Eintritt in den oder die anderen Zwischenräume eine Temperatur aufweist, die kleiner ist als die Umgebungstemperatur, auf der am durchströmten Zwischenraum benachbarten Seite der Umgebung (Außenluft oder Rauminnenseite).

Beim erfindungsgemäßen System ist der Wärmedurchgang durch die erfindungsgemäße Konstruktion stark verkleinert, wobei bei entsprechender Auslegung auch der Wärmedurchgang auf praktisch Null verringert werden kann. Ein Vorteil beim erfindungsgemäßen System ist es, daß der Zwischenraum zwischen den zwei Scheiben, der nicht vom Wärmeübertragungsmedium durchströmt wird, eine zusätzliche Isolierung bewirkt, da er beispielsweise wie Isolierglas oder Verbundglas (zwei Scheiben, die durch eine vorzugsweise glasklare Kunststoffschicht miteinander verbunden sind) ausgeführt sein kann. Die erfindungsgemäße Konstruktion, bei welcher eine Fensterfläche aus beispielsweise drei oder vier mit Abstand voneinander angeordneten Scheiben besteht, erlaubt es im Winter den Zwischenraum zwischen der äußersten und der nächstfolgenden Scheibe mit einem flüssigen oder gasförmigen, vorzugsweise glasklaren Medium (Wärmeübertragungsmedium) zu beaufschlagen. Im Sommer hingegen wird der Zwischenraum zwischen der innersten und der nächstfolgenden Scheibe mit dem Wärmeübertragungsmedium beaufschlagt. Grundprinzip ist es also, daß der Zwischenraum zwischen zwei Scheiben, auf dessen Seite in der Umgebung die höhere Temperatur vorliegt, mit Wärmeübertragungsmedium nicht beaufschlagt wird.

Gemäß der Erfindung ist vorgesehen, daß das Wärmeübertragungsmedium beim Eintritt in den Zwischenraum eine Temperatur aufweist, die kleiner ist als die Umgebungstemperatur, auf der dem durchströmten Zwischenraum benachbarten Seite der Umgebung. Durch diese Maßnahme nimmt im Winter das gegenüber der Außentemperatur kältere Wärmeübertragungsmedium Wärme von der z.B. als Fenster ausgeführten Konstruktion auf. Gleichzeitig nimmt das Wärmeübertragungsmedium aber auch jenen Wärmeanteil auf, der vom Inneren des Gebäudes über den nicht mit Wärmeübertragungsmedium beaufschlagten Zwischenraum zwischen zwei Scheiben nach außen gelangt. Durch diese Maßnahme wird das erfindungsgemäße System bezüglich der vom Innenraum nach außen gelangenden Wärmemenge gleichsam zur "Wärmefalle". Der Wärmeverlust, der bei den üblichen Fensterkonstruktionen entstehen würde, wird damit praktisch auf Null abgesenkt, wobei durch die von der Außenseite her aufgenommene Wärme zusätzliche Wärme in das Nutzwärmesystem eingebracht wird. Wesentlich für die Funktion als "Wärmefalle" ist es, daß die Temperatur des Wärmeübertragungsmediums, das einen Zwischenraum zwischen zwei Scheiben durchströmt, an keiner Stelle der an die Umgebungsluft angrenzenden Begrenzungsfläche über der Außentemperatur liegt.

Sinngemäß ist es mit der erfindungsgemäßen Konstruktion auch möglich, das Eindringen von zu viel Wärme in ein Gebäude zu verhindern, wenn man den Zwischenraum zwischen der innersten und der unmittelbar davor liegenden Scheibe mit Wärmeübertragungsmedium beaufschlagt. In diesem Fall nimmt das Wärmeübertragungsmedium, das eine Temperatur besitzt, die kleiner ist als die Temperatur im Inneren des Gebäudes, vom Raum Wärme auf und kühlt diesen. Gleichzeitig wird auf Grund der oben beschriebenen Funktion als "Wärmefalle" das Eindringen von Transmissionswärme von außen her verhindert. Auch in diesem Fall ist es für die Funktion als wirksame "Wärmefalle" notwendig, daß die Temperatur des den Zwischenraum zwischen der innersten und der nächstfolgenden Scheibe durchströmenden Wärmemediums an keiner Stelle über die Temperatur im Inneren des Gebäudes ansteigt.

Eine Ausführungsform der erfindungsgemäßen Vorrichtung ist dadurch gekennzeichnet, daß wenigstens einer der Zwischenräume zwischen zwei Scheiben durch eine licht- und wärmestrahlendurchlässige, vorzugsweise glasklare Trennwand in zwei Teilräume unterteilt ist, wobei an einem der horizontalen Ränder der Trennwand vorzugsweise am unteren Rand wenigstens eine Durchtrittsöffnung frei gelassen ist. Mit dieser Ausführungsform läßt sich in bestimmten Fällen eine wärmetechnische Verbesserung des den bzw. die Zwischenräume zwischen Scheiben durchströmenden Wärmeübertragungsmediums erreichen. Dabei wird das Wärmeübertragungsmedium vorzugsweise so geführt, daß es zunächst zwischen der Trennwand, die beispielsweise als Membran ausgebildet ist, und der kälteren Fensterseite durchgeführt wird, wobei es sich bis knapp unter die Außentemperatur (im Sommer knapp unter die Raumtemperatur) erwärmt und dann in den Teilraum zwischen der Trennwand und der wärmeren Glasscheibe umgelenkt wird, wobei es beim Durchströmen dieses Teilraumes weiter Wärme aufnimmt. Auf Grund dieser Maßnahme wird der Temperatursprung zur Nutzwärme kleiner und es besteht die Möglichkeit, die Wärmepumpe mit geringerer Temperaturerhöhung und somit geringerer Leistungsziffer zu betreiben. Diese Maßnahme erlaubt es auch, in bestimmten Fällen eintretendes Beschlagen der wärmeren Fensterseite bei hoher Luftfeuchtigkeit, zu verhindern.

Ein ähnlicher Effekt kann bei einer Vorrichtung gemäß der Erfindung erreicht werden, die sich dadurch auszeichnet, daß bei einer Konstruktion mit wenigstens drei Zwischenräumen (n = 3) eine Leitung zur Zufuhr des Wärmeübertragungsmediums durch den der kälteren Seite der Umgebung zugekehrten Zwischenraum vorgesehen ist, daß in der vom Zwischenraum wegführenden Ableitung ein Ventil vorgesehen ist, von dem eine Leitung für das Wärmeübertragungsmedium, die unmittelbar zur Wärmepumpe führt, und eine Leitung ausgeht, die zum mittleren der drei Zwischenräume führt, und daß vom mittleren Zwischenraum eine zur Wärmepumpe führende Leitung ausgeht. Bei dieser Ausführungsform wird das Wärmeübertragungsmedium im Winter vorerst durch den Zwischenraum zwischen äußerster und dahinterliegender Scheibe und dann durch den nächsten Zwischenraum geführt. Bei Betrieb der Vorrichtung im Sommer wird das Wärmeübertragungsmedium zunächst den Zwischenraum zwischen der innersten und der unmittelbar benachbarten Scheibe durchströmen. Erfolgt diese Umlenkung in die mittleren Zwischenräume nicht, so dient dieser als zusätzlicher Isolator.

Die erfindungsgemäße Konstruktion ist nicht auf Fenster, insbesondere Glasfenster beschränkt, sondern kann auch großflächig als Fassaden- oder Wandkonstruktion ausgeführt sein. Bei Ausführung der Konstruktion als Fassaden- oder Wandelement kann die mit der erfindungsgemäßen Konstruktion gewonnene Wärme beispielsweise im Winter zur Raumheizung bzw. im Sommer und im Winter zur Warmwasserbereitung verwendet werden.

Wie bereits angedeutet, kann bei als Fenster ausgebildeten erfindungsgemäßen Konstruktionen der nicht mit Wärmeübertragungsmedium beaufschlagte Zwischenraum zwischen zwei Scheiben (Isolierglasteil) durch ein Zwei- oder Mehrscheibenelement gebildet sein, bei dem die Scheiben miteinander durch eine dazwischenliegende glasklare Kunststoffolie miteinander verbunden werden (Verbundglas wie bei Sicherheits- und Brandschutzverglasungen üblich).

Bei entsprechender Auslegung kann die erfindungsgemäße Konstruktion eine monovalente Heizung eines gesamten Objektes ermöglichen, wobei sich für eine entsprechende Wärmeversorgung als günstig auswirkt, daß die Wärmeverluste des Objektes durch die "Wärmefalle" sehr klein gehalten werden können und daher die dem Antrieb der Wärmepumpe zugeführte Energie als Wärmeenergie weitgehendst erhalten bleibt.

Das in Verbindung mit der erfindungsgemäßen Vorrichtung verwendete Wärmeübertragungsmedium ist gefärbt oder pigmentiert bzw. kann bei Bedarf gefärbt bzw. pigmentiert werden kann. Bevorzugt ist dabei, daß das Ausmaß der Färbung bzw. Pigmentierung des Wärmeübertragungsmediums veränderlich ist. Diese Ausführungsform bietet insbesondere bei der Raumkühlung im Sommer die Möglichkeit, den Durchgang an Strahlungswärme durch die mit der Färbung bzw. Pigmentierung verbundene Erhöhung der Absorptionsfähigkeit des Wärmeübertragungsmediums weiter zu verringern. Die Färbung bzw. Pigmentierung des Wärmeübertragungsmediums erfolgt bevorzugt dadurch, daß dem Medium ein Farbstoff bzw. ein Pigment zugesetzt wird. Die Färbung und der Zusatz von Pigmenten hat nicht nur eine Erhöhung der Wärmeabsorptionsfähigkeit, sondern auch eine Abschattung im Bereich des sichtbaren Lichtes zur Folge. Die Pigmentierung bzw. Färbung des Wärmeübertragungsmediums kann je nach Verwendungszweck und Wunsch bis zu einer völligen Undurchsichtigkeit der Fensterfläche gesteigert werden. Falls eine Änderung der Farbgebung oder der Pigmentierung gewünscht wird, kann dies durch dosiertes Zuführen bzw. Ausfiltern von Farbstoffen bzw. Pigmenten aus dem Wärmeübertragungsmedium oder auf chemische Art und Weise (beispielsweise Ändern des pH-Wertes) erfolgen.

Falls als Wärmeübertragungsmedium ein gasförmiges Medium verwendet wird, besteht die Möglichkeit, den beispielsweise am unteren Rand eines Zwischenraumes zwischen zwei Scheiben befindlichen Vorrat an Pigmenten durch Erhöhung der Strömungsgeschwindigkeit durch den Zwischenraum aufzuwirbeln und in Schwebe zu halten.

Die Färbung bzw. Pigmentierung des Wärmeübertragungsmediums, die sowohl bei einem flüssigen als auch bei einem gasförmigen Wärmeübertragungsmedium erfolgen kann, bietet sowohl im Sommer als auch im Winter Vorteile.

Das Wärmeübertragungsmedium ist bevorzugt frostsicher und nach Ausfilterung bzw. chemischer Kompensation der Pigmentierung glasklar.

Die Intensität der Färbung und der Pigmentierung kann mittels einer mit einer Lichtdurchgangsmessung ausgestatteten Steuerung automatisch den jeweiligen Verhältnissen angepaßt werden.

Wenn der Zwischenraum zwischen zwei Scheiben bei der erfindungsgemäßen Konstruktion von einem pigmentierten Wärmeübertragungsmedium durchströmt wird, kann in bestimmten Anwendungsfällen neben dem Blendschutz auch eine Unterdrückung der UV-Einstrahlung erfolgen, indem man ein hiefür geeignetes Pigment auswählt.

Die erfindungsgemäß vorgesehene Möglichkeit, die Konstruktion mit einem gefärbten bzw. pigmentierten Wärmeübertragungsmedium zu beaufschlagen, erspart sowohl im Fenster- als auch im Gewächshausbau das bisher übliche Anbringen von Rollos, Jalousien bzw. das Auftragen von Farbschichten auf Glashäuser (Gewächshäuser) zur Abschattung im Sommer. Dadurch ist es mit geringstem Aufwand möglich, in erhöhtem Maß auf die Bedürfnisse von Mensch, Tier und Pflanzen Rücksicht zu nehmen.

Die durch die Verwendung eines pigmentierten bzw. gefärbten Wärmeübertragungsmediums bewirkte Abschattung kann die nächtliche Wärmeabstrahlung, insbesondere bei klarem Himmel, erheblich verkleinern.

Um den Strahlendurchgang durch die erfindungsgemäße Konstruktion möglichst klein zu halten, ist es möglich, neben den die Absorption verstärkenden Pigmenten auch stark reflektierende Pigmentierungen zu verwenden. Außerdem ist es möglich, dem Wärmeübertragungsmedium Bestandteile beizumengen, die bei Nichtbedarf wieder ausgefiltert werden, die durch chemische und/oder physikalische Erreger zum Leuchten oder Nachleuchten gebracht werden können.

Durch die Möglichkeit Fassaden- und Wandkonstruktionen verschiedenfarbiges Aussehen zu verleihen, indem verschieden gefärbte bzw. pigmentierte Wärmeübertragungsmedien durchgeleitet werden, ergibt sich der Nebeneffekt einer optischen und gegebenenfalls werbewirksamen Gestaltung von Schaufensterfassaden und sonstigen Werbeflächen bzw. künstlerischen Objekten. Hiebei kann auf den Effekt der Energiegewinnung ganz oder teilweise verzichtet werden. Auch gläserne Zwischenwände können durch Durchleiten von gefärbten oder pigmentierten Medien je nach Bedarf durchsichtig oder undurchsichtig gestaltet werden.

Die veränderliche Pigmentierung von gläsernen Zwischenwänden mit gleichem Aufbau zur Erreichung eines variablen Sichtschutzes etc. ist eine weitere Anwendung.

In einer Ausführungsform der erfindungsgemäßen Vorrichtung ist vorgesehen, daß im Kreislauf des Wärmeübertragungsmediums ein Speicher vorgesehen ist. Die Ausführungsform mit Speicher kann mit oder ohne Wärmepumpe verwirklicht werden. Wenn nur ein Speicher vorgesehen ist, kann ein Wärmeausgleich dadurch erreicht werden, daß das tagsüber bei höheren Temperaturen erwärmte bzw. das während der Nacht abgekühlte Medium gespeichert wird und dann während der anderen Tageshälfte (Nacht bzw. Tag) der erfindungsgemäßen Konstruktion wieder zugeführt wird. Ergänzend oder alternativ kann auch ein Pufferspeicher im Sekundärkreislauf eines durch die Wärmepumpe hochtransformierten weiteren flüssigen Wärmeübertragungsmediums, das auch für den Heizkreislauf dient, vorgesehen sein. Wegen des höheren Energiegehaltes eines im Sekundärkreislauf enthaltenen Pufferspeichers genügt weniger Speichervolumen, da das Wärmeübertragungsmedium im Sekundärkreislauf einen höheren Energiegehalt besitzt. Die Speicherung im Sekundärkreislauf ist vor allem von Vorteil, wenn im Primärkreislauf (Durchleitung des Wärmeübertragungsmediums durch einen Zwischenraum zwischen zwei Glasscheiben) ein nur schwer speicherbares gasförmiges Wärmeübertragungsmedium verwendet wird. Allein durch die Speicherung des durch die Scheibenzwischenräume durchgeleiteten Mediums und den Wiedereinsatz in einer anderen Temperatur phase kann ein Temperaturausgleich im Innenraum erreicht werden.

Die erfindungsgemäße Vorrichtung hat noch den Vorteil, daß im Brandfall ein Fenster-, Fassaden- oder Wandkonstruktionselement auch gekühlt werden kann, um die Gefahr einer Wärme- oder Brandübertragung zu verringern.

Die erfindungsgemäße Konstruktion läßt sich auch zum Heizen verwenden. Beispielsweise kann durch den bzw. die Zwischenräume der Konstruktion der Erfindung ein erwärmtes und vorzugsweise pigmentiertes Medium geleitet werden und die Konstruktion zur Erwärmung einer vor der Konstruktion liegenden Freifläche durch Strahlungsheizung verwendet werden. Sinngemäß können auch Innenräume durch Vergrößerung der Heizflächen, indem beispielsweise eine Fensterkonstruktion in die Heizfläche mit einbezogen wird, rascher aufgeheizt werden.

Die erfindungsgemäße Konstruktion bietet bei Verwendung eines flüssigen Wärmeübertragungsmediums noch den Vorteil einer Verbesserung der Schalldämmung.

Im Rahmen der Erfindung kann vorgesehen sein, daß dem Kreislauf des Wärmeübertragungsmediums ein Drucksensor zugeordnet ist. Dadurch ergibt sich die Möglichkeit, eine Beschädigung der Konstruktion beispielsweise durch ein gewaltsames Eindringen (Einbrecher) zu überwachen.

Wenn die erfindungsgemäße Konstruktion als Fenster ausgebildet ist, kann es sich empfehlen, Maßnahmen vorzusehen, welche das Durchleiten von Wärmeübertragungsmedium unterbrechen, wenn das Fenster geöffnet bzw. gekippt wird.

Weitere Einzelheiten und Merkmale der Erfindung ergeben sich aus den Unteransprüchen sowie der nachstehenden Beschreibung bevorzugter Ausführungsbeispiele. Es zeigen :

Fig. 1 bis 4 im Schnitt verschiedene Ausführungsformen einer Fensterkonstruktion und

Fig. 5 in einem Schaltschema den Primärkreislauf des Wärmeübertragungsmediums und den Sekundärkreislauf.

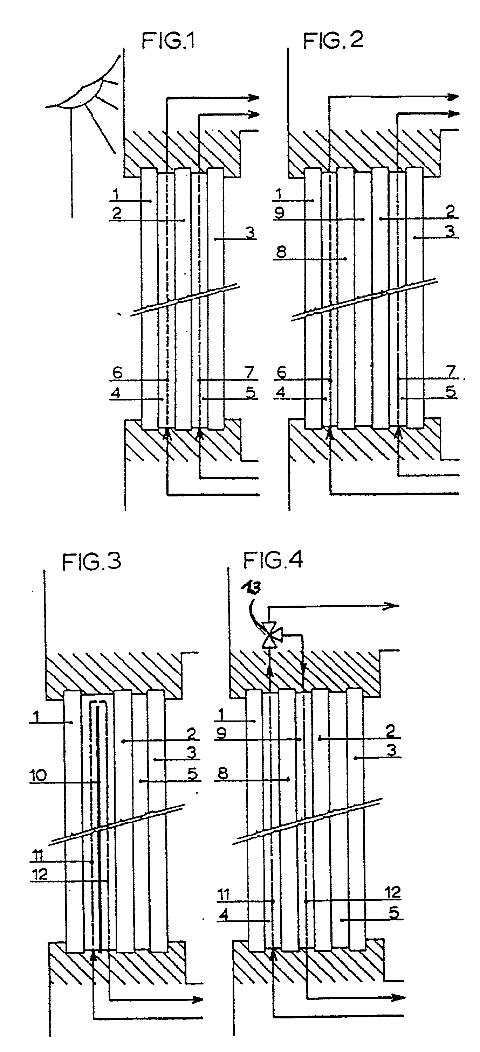

Fig. 1 zeigt eine Fensterkonstruktion mit drei Scheiben 1, 2 und 3, zwischen welchen zwei Zwischenräume 4 und 5 vorgesehen sind. Im Winter wird der der Außenseite näher liegende Zwischenraum 4, d.h. der Zwischenraum zwischen den Glasscheiben 1 und 2, mit einem flüssigen oder gasförmigen Wärmeübertragungsmedium entlang des (in Fig. 1 durch eine strichlierte Linie angedeuteten) Strömungsweges 6 durchströmt, wogegen der innen liegende Zwischenraum 5, d.h. der Zwischenraum zwischen den Scheiben 2 und 3, also der Zwischenraum, der der Seite mit höherer Umgebungstemperatur zugekehrt ist, nicht mit Wärmeübertragungsmedium beaufschlagt wird.

Im Sommer, wenn nicht der Außenumgebung Wärme entzogen, sondern beispielsweise dem Innenraum zu dessen Kühlung Wärme entzogen werden soll, wird Wärmeübertragungsmedium entlang des strichliert eingezeichneten Strömungsweges 7 durch den Zwischenraum 5 zwischen den beiden Glasscheiben 2 und 3 geleitet, wogegen der Zwischenraum 4 nicht mit Wärmeübertragungsmedium beaufschlagt wird.

Der jeweils nicht durchströmte Zwischenraum 4 bzw. 5 bildet zusammen mit den beiden angrenzenden Scheiben 1, 2 bzw. 2, 3 ein isolierendes Element, das beispielsweise mit einem Trockengas gefüllt werden kann.

Es ist darauf hinzuweisen, daß die alternative Beschickung eines der beiden Zwischenräume 4 bzw. 5 mit Wärmeübertragungsmedium nicht unbedingt erforderlich ist. Es sind durchaus auch Ausführungsformen denkbar, bei welchen entweder nur der außenseitige Zwischenraum 4 oder nur der innere Zwischenraum 5 mit Wärmeübertragungsmedium beaufschlagbar ist. Insbesondere in solchen Fällen kann der nicht mit Wärmeübertragungsmedium beaufschlagte Zwischenraum mit vorzugsweise glasklarem Kunststoff ausgefüllt sein, so daß die beiden ihn begrenzenden Scheiben nach Art eines Verbundglases miteinander verbunden sind.

Die in Fig. 2 gezeigte Fensterkonstruktion besitzt vier Scheiben 1, 8 und 2, 3 und drei Zwischenräume 4, 9 und 5. Wie aus Fig. 2 ersichtlich, sind an den mittleren Zwischenraum 9, d.h. den Zwischenraum zwischen den Scheiben 2 und 8, keine Leitungen für Wärmeübertragungsmedium angeschlossen, so daß der Zwischenraum 9 so wie der außen bzw. innen liegende Zwischenraum 4 bzw. 5 im Sommer- bzw. Winterbetrieb nicht mit Wärmeübertragungsmedium beaufschlagt wird, um die Wärmedämmung zu erhöhen.

Die nicht mit Wärmeübertragungsmedium beaufschlagten Zwischenräume der in Fig. 2 gezeigten Ausführungsform einer Fensterkonstruktion können mit Trockengas gefüllt werden. Es ist aber auch möglich, die beiden den nicht durchströmten Zwischenraum 9 begrenzenden Scheiben 8 und 2 miteinander über einen glasklaren Kunststoffisolator zu verbinden, oder aber den Zwischenraum 9 mit einem glasklaren oder eingefärbten Medium auszufüllen.

Falls eine Fig. 2 ähnliche Konstruktion als Glasfassadenelement verwendet wird und undurchsichtig sein soll, kann der Zwischenraum 9 auch mit einer Wärmedämmmasse ausgefüllt werden. Sinngemäß gilt dies auch für undurchsichtige Ausführungsformen mit drei Scheiben, wenn nur die Wärmeaufnahme aus der Umgebung im Winter bzw. die Kühlung des Innenraumes eines Gebäudes im Sommer ausgeführt werden soll.

Fig. 3 zeigt eine Ausführungsform einer Fensterkonstruktion mit drei Scheiben, die im wesentlichen der in Fig. 1 gezeigten Fensterkonstruktion entspricht. Zwischen den beiden Glasscheiben 1 und 2 ist im Zwischenraum 4 eine Trennwand 10 vorgesehen, die als glasklare dünne Membran oder dünne Glasscheibe ausgeführt sein kann. Durch die Trennwand 10 wird der Innenraum 4 in zwei Teilräume unterteilt, die im gezeigten Ausführungsbeispiel am oberen Ende der Trennwand 10 miteinander verbunden sind. Es versteht sich, daß die Durchtrittsöffnung, die im gezeigten Ausführungsbeispiel am oberen Ende der Trennwand 10 vorgesehen ist, auch im Bereich des unteren Randes des Zwischenraumes 4 zwischen den beiden Glasscheiben 1 und 2 vorgesehen sein kann, wie dies insbesondere bei Verwendung eines flüssigen Wärmeübertragungsmediums für gewöhnlich der Fall sein wird.

Bei Betrieb der in Fig. 3 gezeigten Fensterkonstruktion zur Aufnahme von Wärme aus der Umgebung (z.B. Winterbetrieb) wird das Wärmeübertragungsmedium entlang des Strömungsweges 11 in den Teilraum zwischen der Glasscheibe 1 und der Trennwand 10 eingeführt und aus dem Zwischenraum 4 entlang des Strömungsweges 12 über den Teilraum zwischen der Glasscheibe 2 und der Trennwand 10 abgezogen.

Es versteht sich, daß für den Betrieb der in Fig. 3 gezeigten Fensterkonstruktion zur Abkühlung eines Innenraumes (z.B. Sommerbetrieb) zusätzlich oder alternativ auch der Zwischenraum 5 mit einer Trennwand 10, die den Zwischenraum 5 in zwei Teilräume unterteilt, ausgestattet sein kann.

Die in Fig. 4 gezeigte Ausführungsform einer erfindungsgemäßen Fensterkonstruktion besitzt einen Aufbau, welcher der in Fig. 2 gezeigten Fensterkonstruktion im wesentlichen entspricht, wobei die Zwischenräume 4 und 9 zwischen den Glasscheiben 1 und 8 bzw. 8 und 2 wie die Teilräume auf beiden Seiten der Trennwand 10 der in Fig. 3 gezeigten Ausführungsform arbeiten. Im einzelnen wird bei der Ausführungsform von Fig. 4 so vorgegangen, daß das Wärmeübertragungsmedium den Zwischenraum 4 entlang des Strömungsweges 11 durchströmt und außerhalb des Fensterbereiches durch eine entsprechende Stellung des Ventils 13 in den Zwischenraum 9 zwischen den Glasscheiben 8 und 2 zurückgeführt werden kann.

Das Ventil 13 erlaubt es, die in Fig. 4 gezeigte Ausführungsform so wie die in Fig. 2 gezeigte Ausführungsform zu betreiben, wobei das Wärmeübertragungsmedium ausschließlich durch den Zwischenraum 4 geführt wird, so daß sowohl der Zwischenraum 9 als auch der Zwischenraum 3 als Isolator wirken. Die Umstellung von einer Betriebsweise auf die andere erfolgt bei der in Fig. 4 gezeigten Ausführungsform der erfindungsgemäßene Fensterkonstruktion durch entsprechende Stellung des Umschaltventils 13.

Die zuvor mit Bezug auf Fig. 4 geschilderte Arbeitsweise im Winterbetrieb (Aufnahme von Wärme aus der Umgebung) kann auch sinngemäß unter Verwendung des Zwischenraumes 5 und gegebenenfalls des Zwischenraumes 9 für Sommerbetrieb (Aufnahme von Wärme aus dem Inneren eines Gebäudes, in dem die in Fig. 4 gezeigte Fensterkonstruktion vorgesehen ist) angewendet werden.

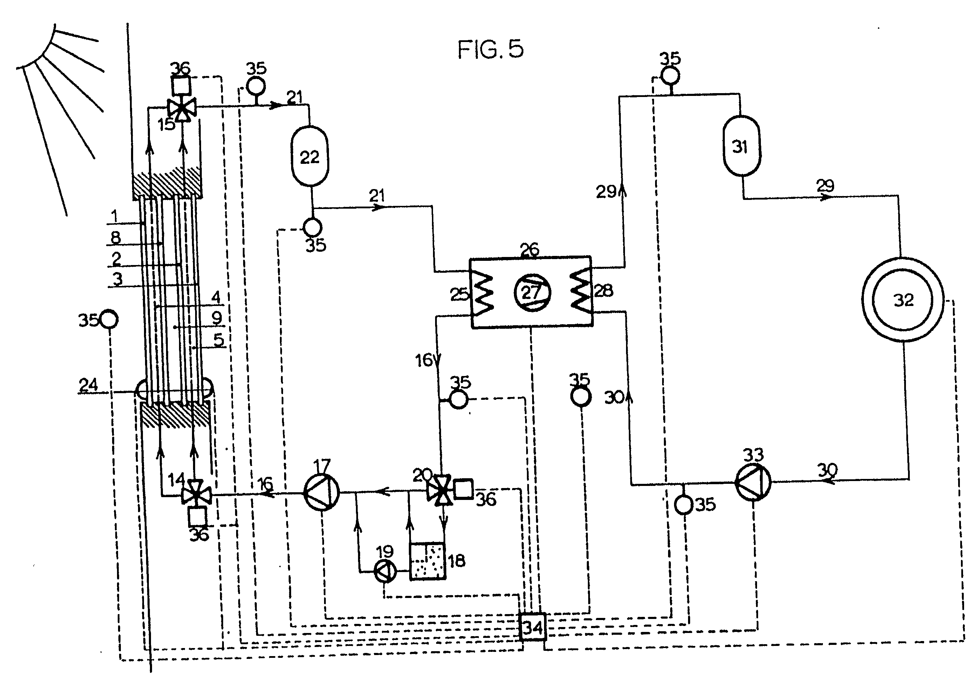

In Fig. 5 ist in einer Schaltskizze der dem in Fig. 2 gezeigten Fenster zugeordnete Primär- und Sekundärkreislauf eines Wärmeübertragungsmediums schematisch wiedergegeben. Im linken Teil der Skizze von Fig. 5 ist das Fenster mit vier Scheiben gemäß Fig. 2 gezeigt. Die äußerste Scheibe 1 begrenzt zusammen mit der ihr benachbarten Scheibe 8 den Zwischenraum 4, der im Winter vom Wärmeübertragungsmedium durchströmt wird. Die beiden anderen Zwischenräume 5 und 9 werden nicht vom Wärmeübertragungsmedium durchströmt und erhöhen den Isolationswert des Fensters.

Die innerste Scheibe 3 und die ihr benachbarte Scheibe 2 begrenzen den Zwischenraum 5, der im Sommer vom Wärmeübertragungsmedium durchströmt wird, wogegen die beiden anderen Zwischenräume 9 und 4 mit Wärmeübertragungsmedium nicht beaufschlagt werden und Isolationsräume zur Erhöhung der Wärmedämmung bilden. Die nicht mit Wärmeübertragungsmedium beaufschlagten Zwischenräume können mit Trokkengas gefüllt werden, um ein Beschlagen der Glasscheiben, welche die Zwischenräume begrenzen, zu verhindern. Es versteht sich, daß die nicht vom Wärmeübertragungsmedium durchströmten Zwischenräume auch mit einem anderen, fließfähigen Medium gefüllt werden können.

Die Umschaltung des Wärmeübertragungsmediums auf den jeweils zu durchströmenden Zwischenraum erfolgt durch entsprechende Stellung der Steuerventile 14 und 15. In der Zulaufleitung 16 ist ein Förderorgan 17 vorgesehen, welches das Wärmeübertragungsmedium umwälzt. Dieses Förderorgan ist beispielsweise als Pumpe (flüssiges Wärmeübertragungsmedium) oder Ventilator (gasförmiges Wärmeübertragungsmedium ausgebildet.

Weiters wird der Leitung 16 im geregelten Bypass ein Gerät 18 zur Zugabe bzw. Abtrennung von Pigmenten mit zugeordneter Dosierpumpe 19 angeschaltet, die Zudosierung bzw. Abtrennung von Pigmenten oder anderen Farbstoffen kann über einen Lichtdurchgangsmesser 24, welcher der Fensterkonstruktion zugeordnet ist, geregelt werden. Es versteht sich, daß anstelle von Pigmenten auch andere Zugaben dem Wärmeübertragungsmedium zugemischt werden können. Das Bypass-Verhältnis wird mit einem Dreiweg-Ventil 20 geregelt.

In der vom Fenster wegführenden Leitung 21 ist ein Primärpufferspeicher 22 eingebaut, der zum Ausgleich von Lastschwankungen und zur Vermeidung zu kurzer Schaltzyklen der Wärmepumpe 26 dient.

In der Leitung 21 ist ein Drucksensor 35 eingebaut, der Verlust oder Ausfall der Förderung des Wärmeübertragungsmediums meldet und daher auch bei einer Zerstörung der Fensterkonstruktion (z.B. Glasbruch, bei einem Einbruch usw.) anspricht.

Das Wärmeübertragungsmedium wird über den Pufferspeicher 22 in den Verdampfer 25 der Wärmepumpe 26 gefördert, dort abgekühlt und wieder der Fensterkonstruktion zugeleitet.

Das im Kompressor 27 der Wärmepumpe 26 verdichtete Kältemittel gibt im Kondensator 28 der Wärmepumpe 26 seine Wärme an ein im Sekundärkreislauf zirkulierendes Wärmeübertragungsmedium ab. Der Sekundärkreislauf besteht aus einer zuführenden Rohrleitung 29 und einer abführenden Rohrleitung 30, einem Sekundärpufferspeicher 31, einem Verbraucher 32 und einer Umwälzeinrichtung 33, die als Pumpe bzw. Ventilator ausgeführt ist. Falls die Abwärme der Wärmepumpe 26 zur unmittelbaren Raumheizung mit Warmluft verwendet wird, entfallen die letztgenannten Anlagenteile, da in diesem Fall der Kondensator 28 unmittelbar durch Vorbeistreichen der Raumluft gekühlt und diese dabei erwärmt in den Raum zurückgeführt wird.

Die Regelung des in Fig. 5 gezeigten Systems erfolgt über eine zentrale Elektronik 34 samt den zugehörigen Fühlern 35 und Stellgliedern 36, wie sie in ähnlicher Form bei bekannten Umweltabsorber- und Wärmepumpensystemen verwendet werden. Die zugehörigen Meß- und Steuerleitungen sind in Fig. 5 strichliert eingezeichnet.

## Patentansprüche

1. Fenster-, Fassaden- und Wandkonstruktion mit wenigstens drei im Abstand voneinander angeordneten Scheiben aus licht- und wärmestrahlendurchlässigem Werkstoff, wie Glas od. dgl., mit zwischen den Scheiben angeordneten Zwischenräumen, mit Leitungen für die Zufuhr und Ableitung von Wärmeübertragungsmedium, das gegebenenfalls gefärbt und/oder mit z.B. färbigen und/oder reflektierenden Pigmenten pigmentiert ist bzw. bei Bedarf gefärbt bzw. pigmentiert werden kann, in bzw. aus wenigstens einem Zwischenraum, mit einer in den Kreislauf des Wärmeübertragungsmediums geschalteten Wärmepumpe, durch die das aus dem Zwischenraum abströmende Wärmeübertragungsmedium wieder auf eine Temperatur unterhalb der Umgebungstemperatur abgekühlt wird, und daß die dabei gewonnene, hochtransformierte Wärme Wärmeverbrauchern zugeführt und/oder gespeichert wird, und mit den Leitungen zugeordneten Schaltmitteln, durch die das Wärmeübertragungsmedium bei n Zwischenräumen zwischen den Scheiben durch höchstens n-1 Zwischenräume geleitet wird, dadurch gekennzeichnet, daß der Zwischenraum (4, 5) zwischen zwei Scheiben (1, 2, 3, 8), auf dessen Seite in der Umgebung (Außenluft oder Rauminnenseite) die höhere Temperatur vorliegt, mit Wärmeübertragungsmedium nicht beaufschlagbar ist, daß das Wärmeübertragungsmedium beim Eintritt in den oder die anderen Zwischenräume (4, 5) eine Temperatur aufweist, die kleiner ist als die Umgebungstemperatur, auf der am durchströmten Zwischenraum benachbarten Seite der Umgebung (Außenluft oder Rauminnenseite).

2. Vorrichtung nach Anspruch 1, dadurch gekennzeichnet, daß das Ausmaß der Färbung des Wärmeübertragungsmediums veränderlich ist.

3. Vorrichtung nach den Ansprüchen 1 oder 2, dadurch gekennzeichnet, daß das Wärmeübertragungsmedium ein Gas oder eine Flüssigkeit ist.

4. Vorrichtung nach einem der Ansprüche 1 bis 3, dadurch gekennzeichnet, daß wenigstens einer der Zwischenräume (4) zwischen zwei Scheiben (1, 2) durch eine licht- und wärmestrahlendurchlässige, vorzugsweise glasklare Trennwand (10) in zwei Teilräume unterteit ist, wobei an einem der horizontalen Ränder der Trennwand vorzugsweise am unteren Rand wenigstens eine Durchtrittsöffnung freigelassen ist.

5. Vorrichtung nach Anspruch 4, dadurch gekennzeichnet, daß bei unterteilten Zwischenräumen (4) das Wärmeübertragungsmedium zuerst in den weiter außen liegenden Teilraum des Zwischenraumes eingeleitet wird.

6. Vorrichtung nach einem der Ansprüche 1 bis 5, dadurch gekennzeichnet, daß bei einer Konstruktion mit wenigstens drei Zwischenräumen (4, 5, 9) (n = 3) eine Leitung zur Zufuhr des Wärmeübertragungsmediums durch den der kälteren Seite der Umgebung zugekehrten Zwischenraum (4) vorgesehen ist, daß in der vom Zwischenraum (4) wegführenden Ableitung ein Ventil (13) vorgesehen ist, von dem eine Leitung für das Wärmeübertragungsmedium, die unmittelbar zur Wärmepumpe (26) führt, und eine Leitung ausgeht, die zum mittleren (9) der drei Zwischenräume (4, 5, 9) führt, und daß vom mittleren Zwischenraum (9) eine zur Wärmepumpe führende Leitung ausgeht.

7. Vorrichtung nach einem der Ansprüche 1 bis 6, dadurch gekennzeichnet, daß dem Kreislauf (21) des Wärmeübertragungsmediums ein Drucksensor (35) zugeordnet ist.

8. Vorrichtung nach einem der Ansprüche 1 bis 7, dadurch gekennzeichnet, daß im Kreislauf (21) des Wärmeüber tragungsmediums ein Speicher vorgesehen ist.

9. Vorrichtung nach einem der Ansprüche 1 bis 8, dadurch gekennzeichnet, daß in den vom Wärmeübertragungsmedium nicht durchströmten Zwischenraum (4, 5, 9) bzw. die Zwischenräume (4, 5, 9) ein trockenes Gas eingeleitet wird.

10. Vorrichtung nach einem der Ansprüche 1 bis 9, dadurch gekennzeichnet, daß wenigstens einer der nicht vom Wärmeübertragungsmedium durchströmten Zwischenraum (4, 5, 9) mit einem vorzugsweise glasklaren Isolator, der fest, flüssig oder gasförmig ist, gefüllt ist.

**Claims**

1. Window, facade and wall construction with at least three plates of light and heat transmitting material arranged spaced from one another, such as glass or the like, with interspaces between the plates, conduits for the supply to and removal from at least one interspace of a heat transfer medium, which may be coloured if desired and/or pigmented with coloured and/or reflecting pigments or can be coloured or pigmented when needed, a heat pump connected in the circuit of the heat transfer medium, through which the heat transfer medium flowing away from the interspace is cooled to a temperature below the ambient temperature, so that the heat thus derived, transformed to a higher grade, is fed to heat loads and/or is stored, and with control means associated with the conduits, through which the heat transfer medium is fed through at most n-1 interspaces when there are n interspaces between the plates, characterized in that the interspace (4, 5) between two plates (1, 2, 3, 8) on the side of which lies the environment with the higher temperature (outside air or room interior), cannot be affected with heat transfer medium, in that the heat transfer medium has a temperature on entry into the other interspace or interspaces (4, 5) which is lower than the ambient temperature on the side of the environment (outside air or room interior) adjacent the interspace through which there is the flow.

2. Apparatus according to claim 1, characterized in that the amount of colouring of the heat transfer medium is variable.

3. Apparatus according to claim 1 or 2, characterized in that the heat transfer medium is a gas or a liquid.

4. Apparatus according to any one of claims 1 to 3, characterized in that at least one of the interspaces (4) between two plates (1, 2) is subdivided into two partial spaces by a light and heat transmitting partition (10), preferably transparent, where a through opening is left at one of the horizontal edges of the partition, preferably at the lower edge.

5. Apparatus according to claim 4, characterized in that, with sub-divided interspaces (4) the heat transfer medium is fed in firstly to the partial space of the interspace lying on the outer side.

6. Apparatus according to any one of claims 1 to 5, characterized in that, in a construction with at least three interspaces (4, 5, 9) (n = 3), a conduit is provided for the supply of the heat transfer medium through the interspace (4) facing the colder side of the environment, in that a valve (13) is provided in the outlet conduit leading away from the interspace (4), from which valve there extend a conduit for the heat transfer medium leading directly to the heat pump (26) and a conduit which leads to the middle one (9) of the three interspaces (4, 5, 9), and in that a conduit leading to the heat pump extends from the middle interspace (9).

7. Apparatus according to any one of claims 1 to 6, characterized in that a pressure sensor (35) is associated with the circuit (21) of the heat transfer medium.

8. Apparatus according to any one of claims 1 to 7, characterized in that an accumulator is provided in the circuit (21) of the heat transfer medium.

9. Apparatus according to any one of claims 1 to 8, characterized in that a dry gas is fed into the interspace (4, 5, 9) or interspaces (4, 5, 9) not traversed by the heat transfer medium.

10. Apparatus according to any one of claims 1 to 9, characterized in that at least one interspace (4, 5, 9) not traversed by the heat transfer medium is filled with a preferably transparent insulator, which is solid, liquid or gaseous.

## Revendications

1. Construction de fenêtre, de façade ou de mur comportant au moins trois plaques en un matériau transmettant la lumière et le rayonnement thermique, tel que du verre ou analogue, qui sont disposées à une certaine distance les unes des autres, des espaces intermédiaires situés entre les plaques, des conduites pour l'entrée et la sortie d'un agent caloporteur, qui, le cas échéant, est coloré et/ou pigmenté à l'aide par exemple de pigments colorés et/ou réfléchissants, ou qui le cas échéant peut être coloré ou pigmenté, dans au moins un espace intermédiaire, une pompe à chaleur montée dans le circuit de l'agent caloporteur, au moyen de laquelle l'agent caloporteur sortant de l'espace intermédiaire est refroidi à une température inférieure à la température ambiante, la chaleur transformée obtenue alimentant des utilisateurs de chaleur et/ou étant stockée, et des moyens de commutation associés aux conduites, grâce auxquels, dans le cas de n espaces intermédiaires entre les plaques, on fait circuler l'agent caloporteur dans n-1 espaces intermédiaires, caractérisée en ce que l'espace intermédiaire (4, 5) entre deux plaques (1, 2, 3, 8), du côté duquel se trouve la température ambiante la plus élevée (air extérieur ou intérieur de la pièce), ne peut pas être alimenté en agent caloporteur, en ce que l'agent caloporteur, à son entrée dans le ou les autres espaces intermédiaires (4, 5), est à une température inférieure à la température ambiante, qui règne du côté adjacent à l'espace intermédiaire parcouru par le liquide (air extérieur ou intérieur de la pièce).

2. Dispositif selon la revendication 1, caractérisé en ce que l'importance de la coloration de l'agent caloporteur est variable.

3. Dispositif selon l'une des revendications 1 ou 2, caractérisé en ce que l'agent caloporteur est un gaz ou un liquide.

4. Dispositif selon l'une des revendications 1 à 3, caractérisé en ce qu'au moins l'un des espaces intermédiaires (4) entre deux plaques (1, 2) est séparé en deux chambres par une paroi (10) perméable à la lumière et au rayonnement thermique, de préférence claire, au moins une ouverture de passage étant laissée libre au niveau d'un bord horizontal, de préférence au niveau du bord inférieur, de la paroi.

5. Dispositif selon la revendication 4, caractérisé en ce que, lorsque les espaces intermédiaires sont subdivisés, l'agent caloporteur pénètre en premier lieu dans la chambre de l'espace intermédiaire située le plus à l'extérieur.

6. Dispositif selon l'une des revendication 1 à 5 caractérisé en ce que, dans le cas d'une construction comportant au moins trois espaces intermédiaires (4, 5, 9) (n = 3), il est prévu une conduite d'amenée de l'agent caloporteur dans l'espace intermédiaire (4) situé du côté le plus froid, en ce qu'il est prévu sur la conduite de sortie de l'espace intermédiaire (4) une vanne (13), à partir de laquelle une conduite pour l'agent caloporteur mène directement à la pompe à chaleur (26) et une conduite mène à l'espace intermédiaire (9), parmi les trois espaces intermédiaires (4, 5, 9), qui est situé au milieu, et en ce qu'une conduite menant à la pompe à chaleur part de l'espace intermédiaire (9) central.

7. Dispositif selon l'une des revendication 1 à 6, caractérisé en ce qu'un capteur de pression (35) est associé au circuit (21) pour l'agent caloporteur.

8. Dispositif selon l'une des revendications 1 à 7 caractérisé en ce qu'il est prévu un accumulateur dans le circuit (21) de l'agent caloporteur.

9. Dispositif selon l'une des revendications 1 à 8, caractérisé en ce qu'un gaz sec est introduit dans l'espace intermédiaire (4, 5, 9) ou dans les espaces intermédiaires (4, 5, 9) non parcourus par l'agent caloporteur.

10. Dispositif selon l'une des revendications 1 à 9, caractérisé en ce qu'au moins un des espaces intermédiaires (4, 5, 9) non parcourus par l'agent caloporteur est rempli au moyen d'un isolant de préférence transparent, qui est solide, liquide ou gazeux.

FIG.1 FIG.2

FIG.3 FIG.4

FIG.5

EP 0 346 320 B1